# EUROPEAN PATENT SPECIFICATION

(11) **EP 1 999 500 B1**
(45) Date of publication and mention of the grant of the patent: **01.12.2010**
(21) Application number: 07713224.9
(22) Date of filing: 08.03.2007
(51) Int. Cl.: G02B 6/12

(54) **OPTICAL DEVICE WITH CHANNEL WAVEGUIDE STRUCTURE AND METHOD OF FABRICATING**
OPTISCHE VORRICHTUNG MIT KANALWELLENLEITERSTRUKTUR UND HERSTELLUNGSVERFAHREN DAFÜR
DISPOSITIF OPTIQUE AVEC STRUCTURE DE GUIDE D'ONDES EN CANAUX ET PROCEDE DE FABRICATION

(30) Priority: 17.03.2006 EP 06111303
(43) Date of publication of application: 10.12.2008
(73) Proprietor: Philips Intellectual Property & Standards GmbH, 20099 Hamburg (DE); Koninklijke Philips Electronics N.V., 5621 BA Eindhoven (NL)
(72) Inventor: RITZ, Arnd, NL-5656 AA Eindhoven (NL); GRUHLKE, Stefan, NL-5656 AA Eindhoven (NL)
(74) Representative: Bekkers, Joost J.J
(86) International application number: PCT/IB2007/050767
(87) International publication number: WO 2007/107902

(56) References cited:
- EP-A- 0 867 735
- JP-A- 2003 342 025
- JP-A- 2003 342 025
- US-A- 6 749 905
- US-A- 6 849 334
- US-A- 2002 064 896
- US-A- 20020 064 896
- US-B1- 6 749 905
- US-B2- 6 849 334
- , XP10834404
- BENSON T.M. ET AL: 'Novel glass compositions and fabrication technologies for photonic integrated circuits' TRANSPARENT OPTICAL NETWORKS vol. 1, 03 July 2005, PISCATAWAY, NJ, USA, IEEE, pages 296 - 299, XP10834404

## Description

The present invention relates to an optical device with a channel waveguide structure on a substrate, in particular for up-conversion of IR-radiation from high power diodes into radiation in the visible range, wherein said channel waveguide structure comprises a fluoride glass, in particular a Zirkonium fluoride glass, especially ZBLAN, forming the waveguide channel.

The up-conversion process for converting IR-radiation from high power diodes into radiation in the visible range is a very promising technology for light sources of future projection systems replacing today's mercury containing discharge lamps as the light source. In the up-conversion technique, the light from the IR-diode is fed into a waveguide comprising a material with an energy level system suited for the energy conversion. The geometry of the waveguide is adapted to the geometry of the active region of the IR-diode and has a large aspect ratio of width to thickness.

Especially for the green color component an effective source has to be made available. The best material system known today is Er-doped ZBLAN-glass. ZBLAN is a multi component material comprising ZrF₄, BaF₂; LaF₃, AlF₃ and NaF in specific concentrations. The ZBLAN-glass is formed by melting together the above pure components in a glass building process. This material system has been demonstrated to enable efficient up-conversion in fibers and also in bulky samples used as targets for thin film techniques.

Optical devices for up-conversion of IR-radiation from high power diodes require channel waveguides from doped ZBLAN for high performance operation. These waveguides have to match the large aspect ratio of width to height of the active zone of the diodes in their cross section. Starting point for the fabrication of such channel waveguides are thin planar players of doped ZBLAN on flat substrates. There is only a limited choice of substrate materials for the waveguide deposition, because refractive index and thermal expansion coefficient of the substrate must simultaneously suite to the ZBLAN properties. One suitable material is MgF₂.

The planar layers of doped ZBLAN can be applied to the substrate by several thin film techniques, such as sputtering, sol-gel techniques and casting. Mostly used today is PLD technique (Pulsed Laser Deposition) from doped or undoped ZBLAN targets. These planar ZBLAN layers need a structuring step to be turned into channel waveguides confining the light beam and enabling efficient up-conversion by conserving high intensity levels inside the up-conversion material. Due to the chemistry of the ZBLAN and the MgF₂ material there is no easy and mass productive structuring process available as is the case with for example Si-technology. Therefore, very slow and technically complicated techniques have to be applied, such as laser processing using fs-pulses.

US 2005/0008316 A1 discloses an optical waveguide amplifier as well as different methods of fabricating such an amplifier. In one of these methods a lower cladding layer is deposited on a substrate. A core layer is deposited on the lower cladding layer and a shadow photo mask is deposited on the core layer. The shadow photo mask is exposed to ultraviolet light. The core layer is then etched to form a core having the desired waveguide form. Another cladding layer is then deposited on the core and on the exposed portion of the lower cladding. In an alternative method a nanoreplication process is used to form the waveguide structure. In this process a master of the waveguide is lithographically fabricated including a core shape having the desired dimensions. The master is used to form a stamper, the stamper including a negative of the desired shape of the waveguide. A lower cladding layer and a core layer are provided on a substrate and the stamper is used to form a core from the core layer. A portion of the lower cladding is exposed and an upper cladding layer is deposited in the core and the exposed portion of the lower cladding layer. The document is silent about the materials used for the core layer. In a nanoreplication process the master is an identical copy of the desired waveguide structure. This enables the forming of a single channel waveguide as disclosed in the document, but is not applicable with waveguide structures of several waveguide channels being arranged side by side on a substrate since the waste material cannot flow off.

T.M.Benson et Al. disclose in " Novel Glass Compositions and Fabrication Technologies for Photonic Integrated Circuits ", Transparent Optical Networks, 2005, Proceedings of the 7th International Conference Barcelona, Spain July 3-7, 2005 the fabrication of chalcogenide glass-based optical waveguides via micro-scale embossing and imprinting. In this fabrication process a mould with the surface features required for transfer, is pressed into a heated substrate of chalcogenide glass and the mould pattern is replicated.

US 6,749,905 B1 discloses method for creating an optical structure includes forming a layer of chalcogenide material upon a substrate, and applying a patterned stamper to the layer of chalcogenide material, in the presence of heat, the patterned stamper causing the layer of chalcogenide material to reflow such that stamped features of the patterned stamper are transferred onto the layer of chalcogenide material. The stamped features onto the layer of chalcogenide material are used to form one of an optical waveguide, an optical mirror, digital video disk data, compact disk data and combinations comprising at least one of the foregoing.

An object of the present invention is to provide an optical device with a channel waveguide structure and a method of fabricating, which allow short processing times for the fabrication of a waveguide structure with several channel waveguides on a common substrate.

The object is achieved with the optical device and the method of fabricating according to claims 1 and 10. Advantageous embodiments of the optical device and the method of fabricating are subject of matter of the dependent claims and are also described in the subsequent part of the description and examples.

In the proposed method of fabricating a channel waveguide structure a thin waveguide layer of a fluoride glass, in particular a Zirkonium fluoride glass, especially ZBLAN, is applied on a substrate or on a base layer on said substrate and structured to form the channel waveguide structure on the substrate. In the proposed method a stamp is provided having cutting edges formed according to desired contours of channels of the waveguide structure and providing free space between at least some of the cutting edges for displacement of material of the waveguide layer. The stamp and/or the waveguide layer are preheated to a temperature between the glass softening temperature and the glass crystallization temperature allowing the displacement of the material of the waveguide layer by the cutting edges. The waveguide layer is then structured by pressing the stamp onto said layer. The stamp is made of a material compatible to the waveguide material. This means that the material of the stamp is chosen to have a lower index of refraction than the material of the waveguide layer and a similar thermal expansion coefficient limiting thermally induced stresses between the two materials with temperature variations to avoid cracking. The stamp is not removed after pressing it onto the waveguide layer but remains on the waveguide structure as a part of the optical device. The stamp then serves as a cover layer or protection layer for the channel structure. In this embodiment which can be combined with all other embodiments already described, also the packaging of the waveguide structure is achieved in one single processing step together with the structuring of the waveguide structure.

The corresponding optical device comprises the substrate with the channel waveguide structure of the waveguide material, wherein the waveguide material of the waveguide layer not used to form the waveguide channels as well as waveguide material displaced by the cutting edges is placed and remains between the waveguide channels of the channel waveguide structure.

With the present invention an optical device with a channel waveguide structure is provided, which allows the structuring of a multitude of waveguide channels side by side on a substrate in a single processing step in which a stamp defining the multitude of waveguide channels is pressed onto the waveguide layer. The waveguide structure can comprise an array of waveguides, straight and curved depending on the application, which can be formed over the area of the whole substrate at the same time in the single processing step.

With the proposed method it is possible to fabricate an array of channel waveguides to be coupled to a diode laser bar having several diode laser sources arranged side by side. Typical dimensions of the waveguide channels are approximately 100 µm in width and 2 to 5 µm in height (thickness). Preferably the height of the waveguide channels of the present invention is lower than 1mm, more preferably lower than 10µm and even more preferably between 1 to 3 and 6 µm.

The present invention makes use of the characteristic that fluoride glass, in particular ZBLAN, is a glass with a relative low softening temperature compared to other glasses. Due to this softening temperature it is possible to deform and shape the material at low temperature, especially if forces are applied to support the flow of the material. A preferred material for the waveguide layer is a rare earth doped ZBLAN glass. Suitable dopants are for example praseodymium, holmium, erbium, thulium, neodymium, europium, dysprosium, terbium or samarium.

In a preferred embodiment the waveguide layer is deposited on the substrate or on a layer on the substrate to the desired height of the waveguide structure using standard thin film techniques. In this embodiment a stamp is used having edges that define the contours of the waveguide channels, wherein the height of the elements of the stamp forming the cutting edges exceeds the height of the deposited layer. The assembly of substrate and waveguide layer is then heated to a sufficiently high temperature and the preheated stamp is pressed onto the surface of the waveguide layer. Temperatures, forces and duration of application are adjusted such, that the edge contour of the stamp is embossed into the waveguide layer. Due to the form and height of the elements forming the cutting edges of the stamp the material is displaced between the waveguide channels formed by the stamping process. Possibly the material is also displaced in the free space remaining above the waveguide layer between the cutting edges.

In another embodiment the waveguide layer is applied to the substrate or to a layer on this substrate with a thickness higher than the desired thickness of the channel waveguide structure. In this embodiment the stamp must be formed to reduce this thickness to the desired value by displacing the layer material to the side. The stamp is therefore designed such that the height between the two cutting edges forming each channel is adapted to the desired height of the channel, wherein the height between cutting edges forming adjacent channels is exceeds the height of the layer to allow the flow of displaced material into this space.

A preferred method of applying the waveguide layer is to place the waveguide material in form of pieces, small grains or fine powder derived from bulk material by cutting, chopping or pulverizing, or derived from particle forming techniques such as sol-gel processes on the substrate or on a layer on the substrate. The particles are covered with a plate, oriented parallel to the substrate. This cover plate is loaded with a force pressing it down to the substrate. The whole assembly is heated up to a temperature at which the applied waveguide material is deformable. Due to the softening of this glass material and the pressure on the glass particles, these particles are flattened and spread between the substrate and the cover plate. Neighboring glass particles coming into contact during the application of the pressure melt together seamlessly, as usually is the case with glasses of equal sort. As a result a plane parallel layer of waveguide material with a thickness in a range from few micrometers to 1 or more millimeters is achieved, depending on the grain size used and the coverage of the surface. Depending on the material of the substrate and the cover plate, the waveguide layer can also adhere to the cover plate as a coating. In the latter case the cover plate can also form the substrate of the proposed channel waveguide structure.

In the same manner the base layer on the substrate or the substrate itself can be formed, for example from an undoped ZBLAN glass. In the case of using ZBLAN material as a substrate, the thickness of the ZBLAN layer is chosen such that this layer is stable enough to be handled as a substrate. This also requires that the two substrates or plates for forming this layer using the above hot pressing process are made from a non-adhering material so that the ZBLAN layer can be removed from these plates.

The use of a base layer or substrate of an undoped ZBLAN glass together with a waveguide layer of an Er-doped ZBLAN glass has the great advantage that there is no mismatch in the coefficient of thermal expansion between the substrate or base layer and the waveguide structure. Also in the case of an additional substrate on which the base layer and the waveguide layer are applied, a wider choice of substrate materials is available, because the undoped base layer forms an optical isolation layer so that there are no restrictions on the index of refraction of the substrate. This structure, therefore, could directly be bonded to the copper cooling plate of an IR diode. By suited surface height structuring of the copper plate, the alignment of the ZBLAN waveguide structure and the diode active layer can be achieved. The ZBLAN structure can be butt-end coupled to the IR diode output.

In the present description and claims the word "comprising" does not exclude other elements or steps as well as an "a" or "an" does not exclude a plurality. Also any reference signs in the claims shall not be construed as limiting the scope of these claims.

The proposed optical device with the channel waveguide structure as well as the corresponding method of fabrication are described in the following by way of examples in connection with the accompanying figures without restricting the scope of the invention as defined by the claims. The figures show:
Fig. 1 an example for forming a channel waveguide structure on a substrate;
Fig. 2 an example of a stamp for forming a channel waveguide structure on a substrate;
Fig. 3 an example of a channel waveguide structure formed with one single stamp on a substrate;
Fig. 4 an example of a channel waveguide structure coupled to a diode laser bar; and
Fig. 5 an example of forming the waveguide layer on the substrate.

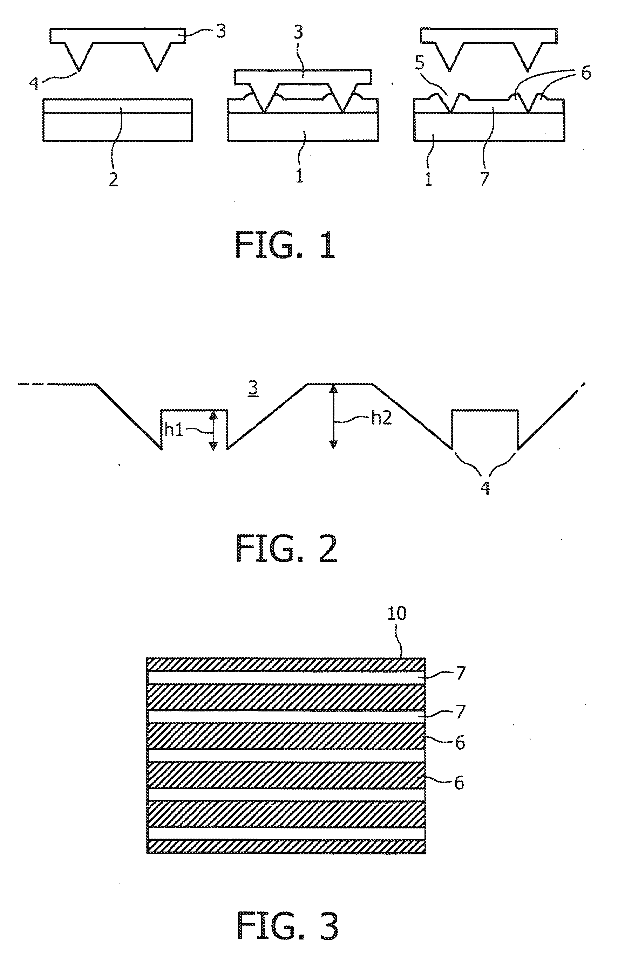

Figure 1 shows a first example not covered by the claims of the proposed method of fabricating a channel waveguide structure. A planar ZBLAN layer 2 with a thickness of 3 µm is formed on a flat MgF₂ substrate 1 by the PLD technique. A stamp 3 with the corresponding cutting edges 4 is provided by structuring a flat Si-plate to form linear cutting elements with a 5 µm high triangular cross-section. The Si-surface is covered with an anti adhering layer, e.g. a Pt layer (not shown in the figure), in order to avoid adhering of the ZBLAN material of the layer 2 to the stamp 3. The cutting edges 4 are designed to define the contours of the desired channel waveguide structure.

The MgF₂ substrate 1 with the ZBLAN layer 2 is heated to a temperature of approximately 300°C. The stamp 3 is preheated to a temperature of approximately 320°C and is pressed onto the ZBLAN layer 2 on the MgF₂ surface. The load on the stamp is 200p/cm² and is applied for 20s. By this process material of the ZBLAN layer 2 is displaced to form grooves 5 at the edges of the desired channels. After cooling down to about 250°C the stamp 3 is withdrawn and the waveguide structure is finished as can be seen in the right hand picture of fig. 1. The waveguide channel 7 is separated by the grooves 5 from adjacent layer material which remains on the substrate. Due to the height of the cutting elements which exceeds the thickness of the ZBLAN layer 2 the material 6 displaced by the cutting edges 4 has enough free space to move to.

In the invention the stamp 3 remains on the waveguide structure serving as a covering or packaging layer of the waveguide structure. In this case the stamp 3 is made of a material having a lower index of refraction than the ZBLAN layer 2 and a similar thermal expansion coefficient. The surface of such a stamp 3 is not covered with an anti adhering layer.

In figure 1 only a portion of the stamp 3 and of the substrate 1 with the ZBLAN layer 2 is shown. The stamp 3 is designed to structure a multiplicity of waveguide channels 7 side by side at the same time. The embossing or cutting edges 4 can be of different shapes according to the detailed purpose how and where the displaced material should flow. In the preferred embodiments, the cutting elements forming the cutting edges 4 are made asymmetric in order to provide steeper edges on the waveguide side.

It is possible to provide a stamp having a structure with different heights between adjacent cutting edges in order to enhance material flow in certain directions or in order to form channel waveguides of different heights in the same processing step. More complex waveguide structures such as couplers and waveguide splitters for combination, mixing or distribution of radiation can also be fabricated with this process.

Figure 2 shows an example of a stamp 3 with asymmetric cutting edges 4. In this case the ZBLAN layer 2 is applied to the substrate with a thickness greater than the desired height h1 of the channel waveguide structure. The stamp 3 then is prepared to define a cutting structure having a height h1 between each two of the cutting edges 4 structuring one channel. On the side directed to the corresponding channel these cutting edges 4 are very steep, preferably vertical or even receding. On the opposing side the cutting edges 4 are inclined to cause the displaced layer material to flow into the space between the desired channels. In this space the cutting structure of the stamp 3 has a height h2 which is higher than the thickness of the applied waveguide layer in order to be able to provide enough free space for the displacement of the layer material. The figure also only shows a portion of the stamp 3. When this stamp 3 is applied, the structured channels have a rectangular cross-section of the desired height wherein all the displaced material remains between the structured waveguide channels.

Figure 3 shows an example of a channel waveguide structure according to the present invention in an upper view. In this example several channel waveguides 7 are formed in a parallel arrangement so that the whole optical device 10 can be coupled to a diode laser bar. Between the parallel waveguide channels 7 the remaining and displaced layer material 6 is indicated. Nevertheless the whole device is covered by the stamp itself.

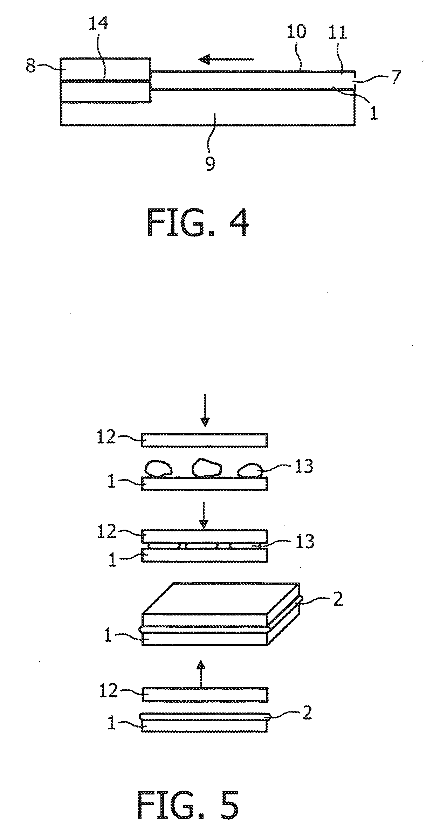

Figure 4 shows an example in a side view, in which the optical device 10 according to the present invention is coupled to a diode laser bar 8. The diode laser bar 8 and the optical device 10 are placed on a copper plate 9 for cooling purposes. The waveguide channels 7, which are covered by a cover layer 11, are exactly adapted in height to the active regions 14 of the diode laser bar 8. This is achieved by an appropriate height structure of the copper plate 9.

The waveguide layer, i.e. the doped ZBLAN layer 2, can be applied to the substrate 1 by a technique shown in figure 5 as an example. The ZBLAN material is applied in form of small grains 13 to the substrate 1. The ZBLAN particles are covered with a cover plate 12 oriented parallel to the substrate 1. The cover plate 12 is loaded with a force pressing it down to the substrate 1. The whole assembly is heated up to a temperature that makes the glass deformable. The whole process is performed under vacuum, in order to prevent voids in the resulting layer. Due to the softening of the glass and the pressure on the glass particles, these particles are flattened and spread between the substrate 1 and the cover plate 12 and melt together seamlessly. After removing the cover plate 12, the desired ZBLAN layer 2 remains on the substrate 1.

The present optical device with the channel waveguide structure as well as the fabrication process allow a very cheep and simple production of a channel waveguide structure, in particular for up-conversion IR-radiation from high power diodes.

### LIST OF REFERENCE SIGNS

- 1: substrate
- 2: ZBLAN waveguide layer
- 3: stamp
- 4: cutting edges
- 5: grooves
- 6: displaced material
- 7: waveguide channel
- 8: laser diode bar
- 9: copper plate
- 10: optical device
- 11: cover layer
- 12: cover plate
- 13: grains
- 14: active region

## Claims

1. Method of fabricating a channel waveguide structure by applying a waveguide layer (2) of a glass on a substrate (1) or on a base layer on said substrate (1) and structuring the waveguide layer (2) to form the channel waveguide structure on said substrate (1),
wherein a stamp (3) is provided having cutting edges (4) formed according to desired contours of channels (7) of the waveguide structure and providing free space for displacement of material of the waveguide layer (2),
wherein the stamp (3) and/or the waveguide layer (2) are preheated to a temperature allowing the displacement of the material of the waveguide layer (2) by the cutting edges (4), and
wherein the waveguide layer (2) is structured by pressing the stamp (3) onto said layer (2), **characterized in that**, the glass is a fluoride glass, in particular a Zirkonium fluoride glass, especially ZBLAN, and wherein said stamp (3) is made of a material having a lower index of refraction and a similar thermal extension coefficient than the material of the waveguide layer (2) and remains on the waveguide structure as a cover layer after the structuring of the waveguide layer (2).

2. Method according to claim 1,
wherein said channel waveguide structure is formed having a thickness of ≤ 10 µm.

3. Method according to claim 1,
wherein said waveguide layer (2) is structured with said stamp (3) in one single pressing step to form an array of waveguide channels (7), which can be coupled to a diode laser bar (8).

4. Method according to claim 1,
wherein said waveguide layer (2) is applied with a thickness higher than a desired thickness of the channel waveguide structure and said stamp (3) is structured to reduce the thickness to the desired thickness by displacement of material of the waveguide layer (2) to said free space.

5. Method according to claim 1,
wherein said waveguide layer (2) is applied by placing the material of the waveguide layer (2) in form of small pieces, small grains or fine powder on the substrate (1) or base layer, heating the material and pressing the material with a plate (12) to the substrate (1) to form the waveguide layer (2).

6. Method according to claim 1,
wherein said waveguide layer (2) is applied by placing the material of the waveguide layer (2) in form of small pieces, small grains or fine powder on a plate (12), heating the material and pressing the material with the plate (12) to the substrate (1) to form the waveguide layer (2).

7. Method according to claim 1,
wherein said base layer is applied on said substrate (1) by placing ZBLAN -material in form of small pieces, small grains or fine powder on the substrate (1) or on a plate (12), heating the material and pressing the material with the plate (12) to the substrate (1) to form the base layer.

8. Method according to claim 1,
wherein said cutting edges (4) are designed to form waveguide channels (7) with vertical side faces.

9. Method according to claim 1,
wherein the material of the waveguide layer (2) is Er-doped ZBLAN-glass.

10. Optical device, in particular for up-conversion of IR-radiation from laser diodes,
comprising a channel waveguide structure with several waveguide channels (7) of a glass as a waveguide material on a substrate (1) or on a base layer on said substrate (1),
said waveguide structure being formed by pressing a stamp (3) onto a waveguide layer (2) of said waveguide material on the substrate (1) or base layer after preheating the stamp (3) and/or the waveguide layer (2) to a temperature above the softening temperature of the waveguide material, said stamp (3) having cutting edges (4) formed according to desired contours of the waveguide channels (7) of the waveguide structure and providing free space for displacement of material of the waveguide layer (2), **characterized in that**, the glass is fluoride glass, in particular a Zirkonium fluoride glass, especially ZBLAN, and, wherein said waveguide structure is covered by said stamp (3), said stamp (3) being made of a material having a lower index of refraction and a similar thermal expansion coefficient than the waveguide material.

11. Optical device according to claim 10,
wherein said waveguide structure has a thickness of ≤ 10 µm.

12. Optical device according to claim 10,
wherein said waveguide structure comprises an array of said waveguide channels (7), which can be coupled to a diode laser bar (8).

13. Optical device according to claim 10,
wherein said waveguide channels (7) have vertical side faces.

14. Optical device according to claim 10,
wherein said waveguide material is Er-doped ZBLAN-glass.

15. Light source comprising an optical device (10) according to one or several of the preceding claims coupled to a diode laser array (8).

## Patentansprüche

1. Verfahren zur Herstellung einer Kanalwellenleiterstruktur durch Auftragung einer Wellenleiterschicht (2) aus einem Glas auf ein Substrat (1) oder auf eine Basisschicht auf dem genannten Substrat (1) und Strukturierung der Wellenleiterschicht (2) zum Bilden der Kanalwellenleiterstruktur auf dem genannten Substrat (1),
wobei ein Stempel (3) vorgesehen ist, der Schneidkanten (4) aufweist, die entsprechend gewünschten Umrissen von Kanälen (7) der Wellenleiterstruktur gebildet sind und der einen Freiraum zur Verdrängung von Material der Wellenleiterschicht (2) schafft, wobei der Stempel (3) und/oder die Wellenleiterschicht (2) auf eine Temperatur vorgewärmt werden, die eine Verdrängung des Materials der Wellenleiterschicht (2) durch die Schneidkanten (4) ermöglicht, und
wobei die Wellenleiterschicht (2) durch Pressung des Stempels (3) auf die genannte Schicht (2) strukturiert wird,
**dadurch gekennzeichnet, dass** das Glas ein Fluoridglas, insbesondere ein Zirkonfluoridglas, speziell ZBLAN, ist, und wobei der genannte Stempel (3) aus einem Material mit einem niedrigeren Brechungsindex und einem ähnlichen thermischen Ausdehnungskoeffizienten als das Material der Wellenleiterschicht (2) hergestellt ist und wobei das Glas nach der Strukturierung der Wellenleiterschicht (2) als Deckschicht auf der Wellenleiterstruktur zurückbleibt.

2. Verfahren nach Anspruch 1,
wobei die genannte Kanalwellenleiterstruktur mit einer Dicke ≤ 10 µm gebildet wird.

3. Verfahren nach Anspruch 1,
wobei die genannte Wellenleiterschicht (2) mit dem genannten Stempel (3) in einem einzigen Pressvorgang zum Bilden einer Reihe von Wellenleiterkanälen (7) strukturiert wird, die mit einer Diodenlaserstange (8) gekoppelt werden können.

4. Verfahren nach Anspruch 1,
wobei die genannte Wellenleiterschicht (2) mit einer Dicke aufgetragen wird, die größer ist als eine gewünschte Dicke der Kanalwellenleiterstruktur und der genannte Stempel (3) zum Verringern der Dicke auf die gewünschte Dicke, und zwar durch Verdrängung von Material der Wellenleiterschicht (2) in den genannten Freiraum, strukturiert ist.

5. Verfahren nach Anspruch 1,
wobei die genannte Wellenleiterschicht (2) durch Auftragung des Materials der Wellenleiterschicht (2) in Form kleiner Stücke, kleiner Körner oder in Form von feinem Pulver auf das Substrat (1) oder auf die Basisschicht, durch Erhitzung des Materials und durch Pressung des Materials mit einer Platte (12) auf das Substrat (1) zum Formen der Wellenleiterschicht (2) angebracht wird.

6. Verfahren nach Anspruch 1,
wobei die genannte Wellenleiterschicht (2) durch Auftragung des Materials der Wellenleiterschicht (2) in Form kleiner Stücke, kleiner Körner oder in Form von feinem Pulver (12), durch Erhitzung des Materials und durch Pressung des Materials mit der Platte (12) auf das Substrat (1) zum Formen der Wellenleiterschicht (2) angebracht wird.

7. Verfahren nach Anspruch 1,
wobei die genannte Basisschicht durch Auftragung von ZBLAN Material in Form kleiner Stücke, kleiner Körner oder in Form von feinem Pulver auf das Substrat (1) oder auf eine Platte (12), durch Erhitzung des Materials und durch Pressung des Materials mit der Platte (12) auf das Substrat (1) zum Formen der Basisschicht auf das genannte Substrat (1) angebracht wird.

8. Verfahren nach Anspruch 1,
wobei die genannten Schneidkanten (4) zum Bilden von Wellenleiterkanälen (7) mit vertikalen Seitenflächen vorgesehen sind.

9. Verfahren nach Anspruch 1,
wobei das Material der Wellenleiterschicht (2) Er-dotiertes ZBLAN Glas ist.

10. Optische Vorrichtung, insbesondere zur Aufwärts-Umwandlung von IR-Strahlung von Laserdioden,
mit einer Kanalwellenleiterstruktur mit verschiedenen Wellenleiterkanälen (7) aus einem Glas als Wellenleitermaterial auf einem Substrat (1) oder auf einer Basisschicht auf dem genannten Substrat (1),
wobei die genannte Wellenleiterstruktur durch Pressung eines Stempels (3) auf eine Wellenleiterschicht (2) des genannten Wellenleitermaterials auf dem Substrat (1) oder auf der Basisschicht nach Vorerhitzung des Stempels (3) und/oder der Wellenleiterschicht (2) auf eine Temperatur über der Erweichungstemperatur des Wellenleitermaterials geformt wird, wobei der genannte Stempel (3) entsprechend gewünschten Umrissen der Wellenleiterkanäle (7) der Wellenleiterstruktur gebildete Schneidkanten (4) hat und zur Verdrängung von Material der Wellenleiterschicht (2) einen Freiraum schafft, **dadurch gekennzeichnet, dass** das Glas Fluoridglas, insbesondere ein Zirkonfluoridglas, speziell ZBLAN ist, und wobei die genannte Wellenleiterstruktur durch den genannten Stempel (3) bedeckt wird, wobei der genannte Stempel (3) aus einem Material mit einem niedrigeren Brechungsindex als das Wellenleitermaterial und mit einem ähnlichen thermischen Ausdehnungskoeffizienten wie das Wellenleitermaterial hergestellt ist.

11. Optische Vorrichtung nach Anspruch 10,
wobei die genannte Wellenleiterstruktur eine Dicke ≤ 10 µm hat.

12. Optische Vorrichtung nach Anspruch 10,
wobei die genannte Wellenleiterstruktur eine Reihe der genannten Wellenleiterkanäle (7) aufweist, die an eine Diodenlaserstange (8) gekoppelt werden kann.

13. Optische Vorrichtung nach Anspruch 10,
wobei die genannten Wellenleiterkanäle (7) vertikale Seitenflächen haben.

14. Optische Vorrichtung nach Anspruch 10,
wobei das genannte Wellenleitermaterial Er-dotiertes ZBLAN Glas ist.

15. Lichtquelle mit einer optischen Vorrichtung (10) nach einem oder mehreren der vorstehenden Ansprüche, gekoppelt an eine Diodenlaseranordnung (8).

## Revendications

1. Procédé de fabrication d'une structure de guide d'onde de canal par le dépôt d'une couche de guide d'onde (2) d'un verre sur un substrat (1) ou sur une couche de base sur ledit substrat (1) et par la structuration de la couche de guide d'onde (2) afin de former la structure de guide d'onde de canal sur ledit substrat (1),
dans lequel il est prévu une matrice (3) ayant des bords de coupe (4) qui sont formés selon des contours souhaités de canaux (7) de la structure de guide d'onde et qui fournissent de l'espace libre pour le déplacement du matériau de la couche de guide d'onde (2),
dans lequel la matrice (3) et/ou la couche de guide d'onde (2) sont préchauffées à une température qui permet le déplacement du matériau de la couche de guide d'onde (2) par les bords de coupe (4), et
dans lequel la couche de guide d'onde (2) est structurée par l'application par pressage de la matrice (3) sur ladite couche (2), **caractérisé en ce que** le verre est un verre de fluorure, en particulier un verre de fluorure de zirconium, spécialement ZBLAN, et dans lequel ladite matrice (3) est fabriquée à partir d'un matériau ayant un plus faible indice de réfraction et un coefficient similaire de dilatation thermique que le matériau de la couche de guide d'onde (2) et reste sur la structure de guide d'onde en tant qu'une couche de recouvrement après la structuration de la couche de guide d'onde (2).

2. Procédé selon la revendication 1,
dans lequel il est formé ladite structure de guide d'onde de canal ayant une épaisseur ≤ 10 µm.

3. Procédé selon la revendication 1,
dans lequel ladite couche de guide d'onde (2) est structurée à l'aide de ladite matrice (3) en une seule étape de pressage de manière à former un réseau de canaux de guide d'onde (7) qui peut être couplé à une barre laser à diode (8).

4. Procédé selon la revendication 1,
dans lequel ladite couche de guide d'onde (2) est appliquée avec une épaisseur qui est supérieure à une épaisseur souhaitée de la structure de guide d'onde de canal et dans lequel ladite matrice (3) est structurée de manière à réduire l'épaisseur à l'épaisseur souhaitée par le déplacement du matériau de la couche de guide d'onde (2) audit espace libre.

5. Procédé selon la revendication 1,
dans lequel ladite couche de guide d'onde (2) est appliquée par le positionnement du matériau de la couche de guide d'onde (2) sous forme de petits morceaux, de petits grains ou de poudre fine sur le substrat (1) ou sur la couche de base, par le chauffage du matériau et par le pressage du matériau avec une plaque (12) sur le substrat (1) de manière à former la couche de guide d'onde (2).

6. Procédé selon la revendication 1,
dans lequel ladite couche de guide d'onde (2) est appliquée par le positionnement du matériau de la couche de guide d'onde (2) sous forme de petits morceaux, de petits grains ou de poudre fine sur une plaque (12), par le chauffage du matériau et par le pressage du matériau avec la plaque (12) sur le substrat (1) de manière à former la couche de guide d'onde (2).

7. Procédé selon la revendication 1,
dans lequel ladite couche de base est déposée sur ledit substrat (1) par le positionnement du matériau ZBLAN sous forme de petits morceaux, de petits grains ou de poudre fine sur le substrat (1) ou sur une plaque (12), par le chauffage du matériau et par le pressage du matériau avec la plaque (12) sur le substrat (1) de manière à former la couche de base.

8. Procédé selon la revendication 1,
dans lequel lesdits bords de coupe (4) sont conçus de manière à former des canaux de guide d'onde (7) avec des faces latérales verticales.

9. Procédé selon la revendication 1,
dans lequel le matériau de la couche de guide d'onde (2) est du verre ZBLAN dopé à l'erbium.

10. Dispositif optique, en particulier pour la conversion en haut du rayonnement infrarouge en provenance de diodes laser,
comprenant une structure de guide d'onde de canal avec plusieurs canaux de guide d'onde (7) d'un verre en tant qu'un matériau de guide d'onde sur un substrat (1) ou sur une couche de base sur ledit substrat (1), ladite structure de guide d'onde étant formée par l'application par pressage d'une matrice (3) sur une couche de guide d'onde (2) dudit matériau de guide d'onde sur le substrat (1) ou sur la couche de base après le préchauffage de la matrice (3) et/ou de la couche de guide d'onde (2) à une température au-dessus de la température de ramollissement du matériau de guide d'onde, ladite matrice (3) ayant des bords de coupe (4) qui sont formés selon des contours souhaités des canaux de guide d'onde (7) de la structure de guide d'onde et qui fournissent de l'espace libre pour le déplacement du matériau de la couche de guide d'onde (2), **caractérisé en ce que** le verre est un verre de fluorure, en particulier un verre de fluorure de zirconium, spécialement ZBLAN, et dans lequel ladite structure de guide d'onde est recouverte de ladite matrice (3), ladite matrice (3) étant fabriquée à partir d'un matériau qui présente un plus faible indice de réfraction et un coefficient similaire de dilatation thermique que le matériau de guide d'onde.

11. Dispositif optique selon la revendication 10,
dans lequel ladite structure de guide d'onde présente une épaisseur ≤ 10 µm.

12. Dispositif optique selon la revendication 10,
dans lequel ladite structure de guide d'onde comprend un réseau desdits canaux de guide d'onde (7) qui peut être couplé à une barre laser à diode (8).

13. Dispositif optique selon la revendication 10,
dans lequel lesdits canaux de guide d'onde (7) présentent des faces latérales verticales.

14. Dispositif optique selon la revendication 10,
dans lequel ledit matériau de guide d'onde est du verre ZBLAN dopé à l'erbium.

15. Source lumineuse comprenant un dispositif optique (10) selon l'une quelconque ou selon plusieurs des revendications précédentes 1 à 14 qui est couplé à un ensemble de lasers à diode (8).
